# EUROPEAN PATENT SPECIFICATION

(11) **EP 0 644 107 B1**
(45) Date of publication and mention of the grant of the patent: **04.02.1998**
(21) Application number: 94114810.8
(22) Date of filing: 20.09.1994
(51) Int. Cl.: B62J 17/00, F02M 35/16

(54) **Fairing with air inlet for motorcycle**
Verkleidung mit Luftansaugstutzen für Motorrad
Carénage avec dispositif d'admission d'air pour motocyclette

(30) Priority: 22.09.1993 JP 261652/93
(43) Date of publication of application: 22.03.1995
(73) Proprietor: HONDA GIKEN KOGYO KABUSHIKI KAISHA, Minato-ku Tokyo (JP)
(72) Inventor: Hagiwara, Shinji c/o K.K. Honda Gijutsu Kenkyusho, Wako-shi, Saitama (JP); Kobayashi, Kouichi / K.K. Honda Gijutsu Kenkyusho, Wako-shi, Saitama (JP); Shimokawa, Kouji c/o K.K. Honda Gijutsu Kenkyusho, Wako-shi, Saitama (JP); Nishimoto, Kenichi / K.K. Honda Gijutsu Kenkyusho, Wako-shi, Saitama (JP)
(74) Representative: Fincke, Karl Theodor, Dipl.-Phys. Dr.

(56) References cited:
- PATENT ABSTRACTS OF JAPAN vol. 14, no. 361 (M-1006) (4304) 6 August 1990 & JP-A-02 128 977 (YAMAHA MOTOR CO LTD) 17 May 1990
- MOTORRAD MAGAZIN, January 1993, STUTTGART pages 6 - 11 G. WIMME 'Ballkleid'

## Description

### [Applicable Industrial Field]

This invention relates to a windshield apparatus for a motorcycle wherein a pair of wind inlet openings opened forwardly are provided at left and right symmetrical positions of a windshield such that external air is introduced into an intake apparatus for an engine by way of a pair of external air admission pipes from the wind inlet openings.

### [0002]

### [Prior Art]

Such a windshield apparatus as described above is already known, and a surface of the windshield forwardly of wind inlet openings is formed into recessed grooves to form wind introduction paths to the wind inlet openings (refer to, as an example, Japanese Patent Laid-Open Application No. Heisei 2-128977).

### [0003]

### [Subject to Be Solved by the Invention]

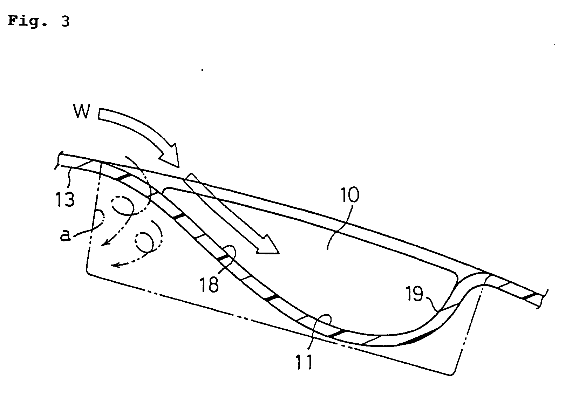

By the way, since the transverse section of the wind introduction paths is approximate to a substantially channel-shaped section as indicated by an imaginary line in FIG. 3 and a wall face a on the body center side varies substantially perpendicularly, a surface flow W of running wind passing on the wind introduction path in the transverse direction is sometimes exfoliated, at the portion of the wall face a, from the surface of the windshield. Such a phenomenon likely occurs when cross wind is strong such as upon cornering, and as a result, the external air admission efficiency is deteriorated. Thus, it is an object of the present invention to eliminate such a problem as described above and enhance the external air admission efficiency of wind inlet openings.

### [0004]

### [Means to Solve the Subject]

The above mentioned problems are solved by the features stated in claim 1.

### [0005]

### [Action]

When running wind flows outwardly from the center side of the body in directions transverse to the wind introduction paths, since the curved faces in the transverse direction of the wind introduction paths are formed as smooth continuous curved faces and besides the portion of each of the continuous curved faces on the center side of the body is made more moderate than the portion on the outer side of the body, the running wind flows in the wind introduction paths in a condition wherein it is not exfoliated readily and enters the wind inlet openings, and accordingly, the external air admission efficiency is enhanced.

### [0006]

### [Embodiment]

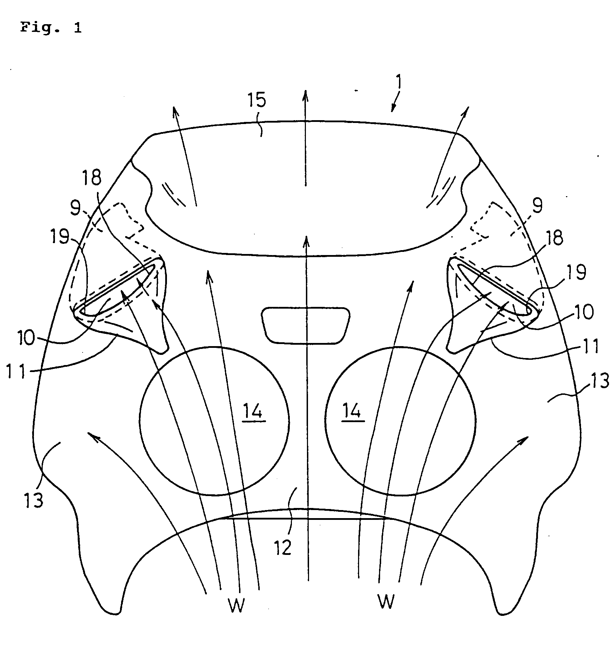

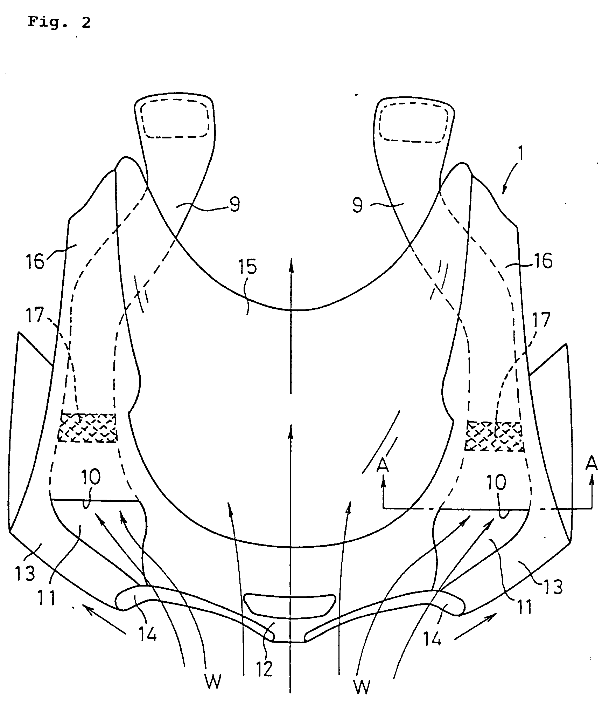

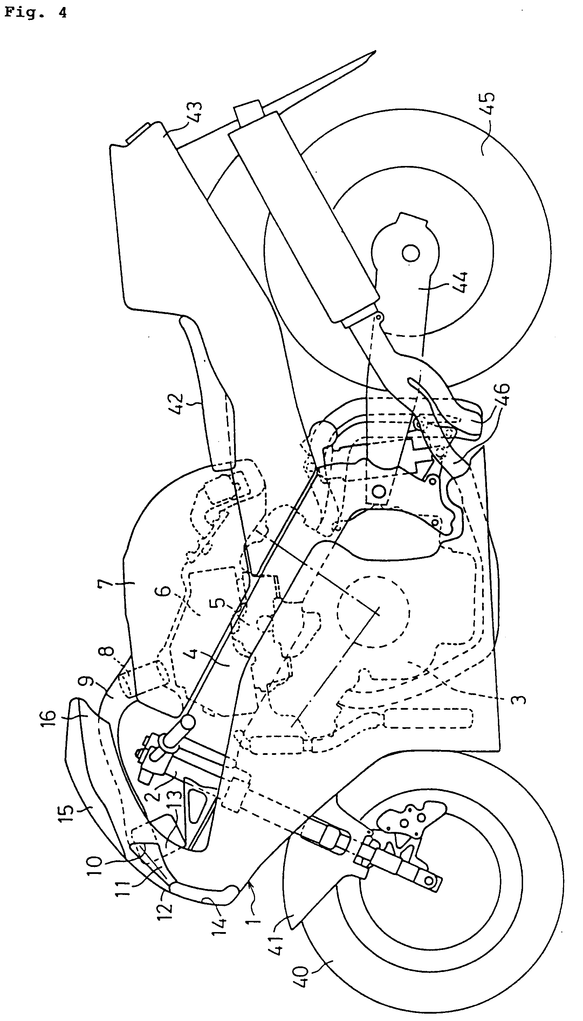

An embodiment will be described with reference to FIGS. 1 to 7. FIG. 1 is a front elevational view of a windshield 1 which is a windshield apparatus for a motorcycle of the embodiment, FIG. 2 is a plan view of the windshield 1, FIG. 3 is an enlarged sectional view taken along line A-A in FIG. 2, and FIG. 4 is a side elevational view of a motorcycle to which the present embodiment is applied.

### [0007]

Referring first to FIG. 4, the windshield 1 is mounted such that it covers over a front side of a body continuously from an upper front portion of an inverted-type front fork 2 to left and right side portions of a lengthwise four-cylinder V-type engine 3.

### [0008]

The V-type engine 3 is supported below a pair of left and right main frames 4 extending in the lengthwise direction, and a throttle body 5 is mounted at a V-bank portion of the V-type engine 3 and external air is supplied from an intake apparatus 6 above the throttle body 5 into the V-type engine 3.

### [0009]

The intake apparatus 6 for the engine is accommodated in a recessed portion provided at a bottom portion of a fuel tank 7 supported on the main frames 4, and external air is supplied into the intake apparatus 6 for the engine 6 from a wind inlet pipe 8 extending vertically at a front portion of the fuel tank 7. The wind inlet pipe 8 is connected to a wind inlet opening 10 opened forwardly of the windshield 1 by way of an external air admission pipe 9. The wind inlet opening 10 is opened forwardly, and a wind introduction path 11 in the form of a recessed groove is formed on a surface of the windshield 1 forwardly of the wind inlet opening 10. It is to be noted that the external air admission system structure from the wind inlet pipe 8 to the wind introduction path 11 is formed leftwardly and rightwardly in pair (FIGS. 1 and 2).

### [0010]

As apparent from FIGS. 1 and 2, the surface of the windshield 1 is formed as a smooth curved face in order to enhance the wind regulation effect, and the wind inlet openings 10 and the wind introduction paths 11 are formed at left and right symmetrical positions of side portions 13 of a front face 12 adjacent openings 14 for headlights. A screen 15 is provided at an upper portion of the front face 12 and extends long rearwardly, and the external air admission pipes 9 extend in the lengthwise direction along and in the proximity of inner sides of a pair of left and right extensions 16 connecting to the screen 15.

### [0011]

The external air admission pipes 9 are formed by a suitable method integrally with or separately from the windshield 1 or in a front and rear divisional type, and a filter 17 is inserted in the proximity of the wind inlet opening 10 in the inside of each of the external air admission pipes 9 when necessary (FIG. 2). The permeability or the like of the filters 17 can be selected arbitrarily in order to adjust the external air admission amount into the external air admission pipes 9.

### [0012]

As apparent from FIG. 3, the wind introduction paths 11 are formed in a concave condition on the surfaces of the side portions 13 in smooth continuous curved faces in a transverse direction, and the sectional shape of them is approximate to a shape substantially obtained by turning the L-shape while it conventionally has a substantially channel shape (imaginary line). As a result, the shape of the wind inlet openings 10 is substantially similar to a triangle.

### [0013]

Of each of the continuous curved faces forming the wind introduction paths 11, a body center side curved face 18 is formed more moderately than an outer side curved face 19.

### [0014]

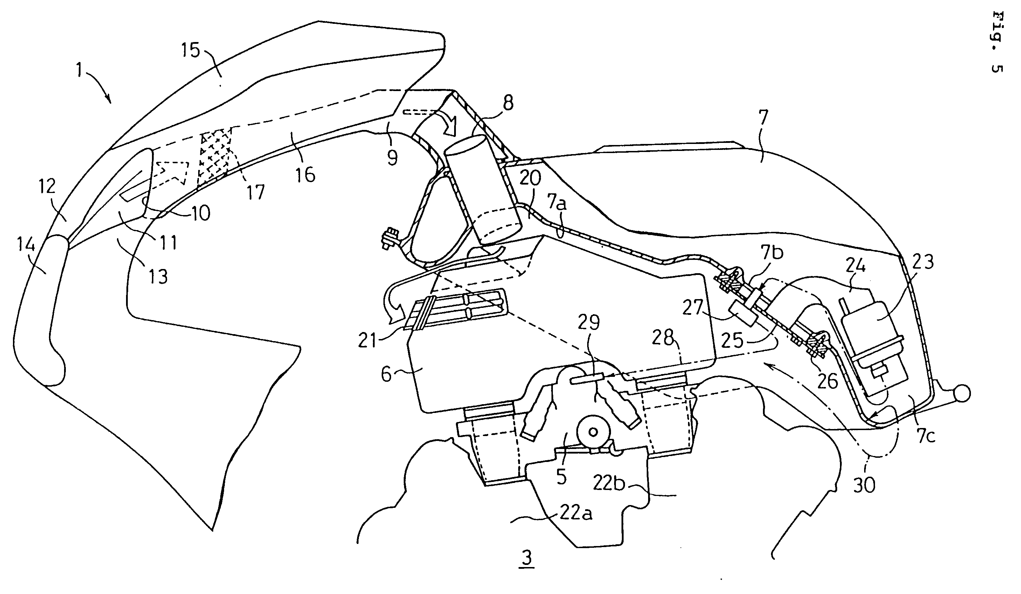

FIG. 5 is a view showing an intake system and a fuel system, and external air admitted into the external air admission pipes 9 from the wind introduction paths 11 through the wind inlet openings 10 passes the wind inlet pipes 8 and goes out into a space 20 formed below a bottom portion 7a of the fuel tank 7, whereafter it enters the intake apparatus 6 for the engine from an intake duct 21 formed on a front face of the intake apparatus 6 for the engine and then makes fuel air mixture in the throttle body 5 and is then supplied into left and right cylinders of front and rear cylinders 22a and 22b.

### [0015]

A fuel pump 23 is provided at a rear lower portion in the fuel tank 7 and is supported on a base 25 by way of a bracket 24, and the base 25 is mounted around an opening 7b by means of bolts 26. Therefore, the fuel pump 23 can be mounted from below the fuel tank 7.

### [0016]

Fuel force fed from the fuel pump enters a supply nozzle 29 of the throttle body 5 from a joint 27 of the base 25 through a supply side hose 28. Meanwhile, fuel returning from the throttle body 5 is returned into a lowermost chamber 7c of the fuel tank 7 by way of a returning side hose 30.

### [0017]

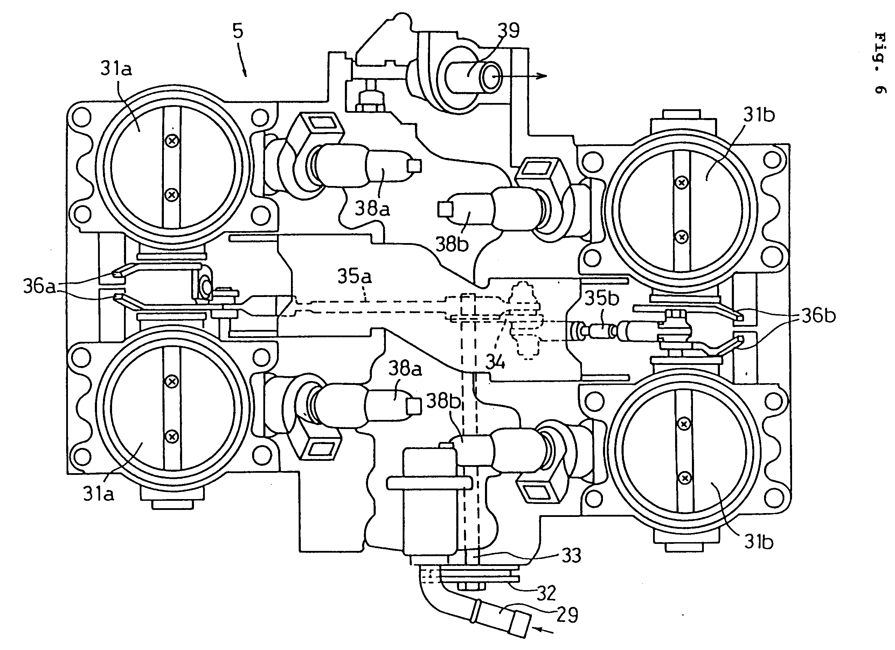

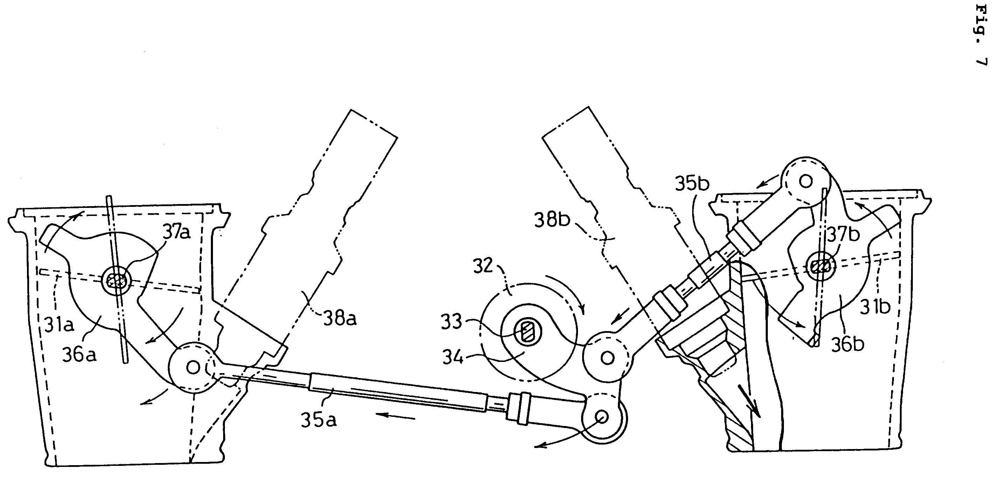

FIG. 6 is a view showing the throttle body 5 as viewed from above, and FIG. 7 is a view showing a link system for front and rear throttle valves 31a and 31b. As apparent from FIG. 7, a main plate 34 mounted on a rotary shaft 33 of a drum 32 provided at a central portion of a side face of the throttle body 5 is connected to front and rear follower plates 36a and 36b provided on side faces of individual intake air paths by way of link rods 35a and 35b extending in the lengthwise direction, and the throttle valves 31a and 31b are mounted for integral turning motion on shafts 37a and 37b of the follower plates 36a and 36b, respectively.

### [0018]

The front and rear throttle valves 31a and 31b are opened or closed in symmetrical directions, and portions of them adjacent fuel injection nozzles 38a and 38b are opened in the downstream direction so that external air flows well.

### [0019]

It is to be noted that, since the front and rear intake air paths, the front and rear throttle valve and the front and rear fuel injection nozzles are provided on each of the left and right corresponding to the number of cylinders as apparent from FIG. 6, also the front and rear follower plates 36a and 36b are provided adjacent the left and right of the front and rear intake paths, and the left and right front side follower plates 36a operate in an interlocking relationship with a single link rod 35a and the left and right rear side follower plates 36b operate in an interlocking relationship with a single link rod 36b. Consequently, all of the follower plates 36a and 36b are opened or closed at a time in an interlocking relationship with the drum 32. It is to be noted that reference character 36c (FIG. 7) of each of the follower plates 36b is a tuning adjustment portion, and tuning adjustment can be performed by way of a tuning screw (not shown) mounted on the tuning adjustment portion 36c.

### [0020]

Reference numeral 39 in FIG. 6 denotes a fuel returning side nozzle, and the returning side hose 30 (FIG. 5) is connected to the fuel returning side nozzle 39. It is to be noted that reference numeral 40 in FIG. 4 denotes a front wheel, 41 a front fender, 42 a seat, 43 a rear cover, 44 a cantilever type rear arm, 45 a rear wheel, and 46 an exhaust pipe.

### [0021]

Subsequently, operation of the present embodiment will be described. First, referring to FIGS. 1 and 3, surface flows W of running wind flow along the surface of the windshield 1, and when the surface flows W partially enter the wind inlet openings 10 from the wind introduction paths 11, even if they flow from the central sides of the body in directions transverse to the wind introduction paths 1, since the curved faces in the transverse direction of the wind introduction paths 11 form smooth continuous curved faces and the body center side curved faces 18 are more moderate than the outer side curved faces 19, the surface flows W readily flow into the wind inlet openings 10 without being exfoliated from the surfaces of the body center side curved faces 18.

### [0022]

Consequently, comparing with the prior art, if the opening area is equal, the external air admission efficiency of the wind inlet openings 10 is higher by an amount by which exfoliation of the surface flows W is reduced. Besides, external air can be admitted readily even in a running condition wherein cross wind is increased such as upon cornering.

### [0023]

Further, by inserting the filters 17 to the locations in the proximity of the wind inlet openings 10 in the external air admission pipes 9 and by adjusting the permeability or the like of the filters 17, the air flow rate into the external air admission pipes 9 can be controlled. Therefore, for example, if the air flow rate in the external air admission pipes 9 is adjusted to an optimum degree in advance upon cornering, the motion performance can be further enhanced.

### [0024]

### [Effects of the Invention]

According to the present invention, a pair of wind inlet openings and a pair of wind introduction paths are formed at left and right symmetrical positions of a windshield, and each of the wind introduction paths is formed with a smooth continuous curved face in a transverse direction and a curved face of the smooth continuous curved face on the center side of a body is made more moderate than the other portion on the outer side. Therefore, exfoliation of running wind which passes the wind introduction paths is reduced, and where the opening area of the wind inlet openings is equal, the external air admission efficiency can be enhanced, but where the introduction rate is fixed, the opening area of the wind inlet openings can be reduced.

### [Brief Description of the Drawings]

### [FIG. 1]

FIG. 1 is a front elevational view of a windshield according to an embodiment.

### [FIG. 2]

FIG. 2 is a plan view of the windshield according to the embodiment.

### [FIG. 3]

FIG. 3 is an enlarged sectional view taken along line A-A of FIG. 2.

### [FIG. 4]

FIG. 4 is a side elevational view of a motorcycle to which the embodiment is applied.

### [FIG. 5]

FIG. 5 is a view showing an intake system and a fuel supply system of the embodiment.

### [FIG. 6]

FIG. 6 is a plan view of essential part of the embodiment.

### [FIG. 7]

FIG. 7 is a view showing a link system for throttle valves.

### [Description of Reference Numerals]

1: windshield, 3: V-type engine. 4: main frame, 5: throttle body, 6: intake apparatus, 7: fuel tank, 8: wind inlet pipe, 9: external air admission pipe, 10: wind inlet opening, 11: wind introduction path, 18: body center side curved face, 19: outer side curved face

## Claims

1. A windshield apparatus for a motorcycle which includes a windshield (1) which covers over a front portion of a body of the motorcycle, wherein external air is introduced into an intake apparatus (6) of an engine (3) by way of a pair of intake conduits (9) from a pair of air inlet openings (10) provided at left and right symmetrical positions of said windshield (1) and opened forwardly,
characterized in that
one recessed groove is formed in a surface of said windshield (1) forwardly of each air inlet opening (10) and provides an air introduction path (11) to said air inlet opening (10), and
each recessed groove has a surface formed as smooth continuous curved surface (18, 19) in a transverse direction of said air introduction path (11) and having a first portion (18) adjacent to a center side of the body and a second portion (19) on an outer side of the body, said first portion (18) being curved more moderately than said second portion (19).

2. A windshield apparatus for a motorcycle according to claim 1, wherein an air cleaner (17) is located rearwardly of said windshield (1).

## Patentansprüche

1. Windschildvorrichtung für ein Motorrad, welche ein Windschild (1) aufweist, die einen Vorderbereich eines Rumpfs des Motorrads abdeckt, wobei Außenluft durch ein Paar von Einlaßleitungen (9) von einem Paar von an linken und rechten symmetrischen Positionen des Windschilds (1) vorgesehenen und nach vorne offenen Lufteingangsöffnungen (10) in eine Einlaßeinrichtung (6) eines Motors (3) eingeführt wird,
dadurch gekennzeichnet, daß
eine Aussparungsrinne in einer Oberfläche des Windschilds (1) vor jeder Lufteingangsöffnung (10) ausgebildet ist und einen Lufteinführweg (11) zur Lufteingangsöffnung (10) bereitstellt, und
jede Aussparungsrinne eine Oberfläche aufweist, die als sanft, kontinuierlich gekrümmte Oberfläche (18, 19) in einer Querrichtung des Lufteinführwegs (11) ausgebildet ist und einen ersten Bereich (18) benachbart einer Zentrumsseite des Rumpfs sowie einen zweiten Bereich (19) auf einer Außenseite des Rumpfs besitzt, wobei der erste Bereich (18) mäßiger gekrümmt ist als der zweite Bereich (19).

2. Windschildvorrichtung für ein Motorrad nach Anspruch 1, wobei eine Luftreinigungseinrichtung (17) hinter dem Windschild (1) angeordnet ist.

## Revendications

1. Dispositif formant pare-brise pour une motocyclette comprenant un pare-brise (1) qui recouvre une partie avant d'un corps de motocyclette, dans lequel de l'air extérieur est introduit dans un dispositif d'aspiration (6) d'un moteur (3) par l'intermédiaire de deux conduits d'aspiration (9) partant de deux ouvertures d'arrivée d'air (10) prévues dans des positions symétriques gauche et droite du pare-brise (1) et ouvertes vers l'avant,
caractérisé en ce qu'une rainure évidée est formée dans une surface de ce pare-brise (1) en avant de chaque ouverture d'arrivée d'air (10) et fournit un trajet d'introduction d'air (11) à ladite ouverture d'arrivée d'air (10), et en ce que
chaque rainure évidée a une surface formée comme surface lisse continue courbe (18, 19) dans un sens transversal de ce trajet d'introduction d'air (11) et possédant une première partie (18) adjacente à un côté central du corps et une deuxième partie (19) sur un côté extérieur du corps, ladite première partie (18) étant plus modérément courbe que ladite deuxième partie (19).

2. Dispositif formant pare-brise pour motocyclette selon la revendication 1, dans lequel un épurateur d'air (17) est situé à l'arrière de ce pare-brise (1).
